# EUROPÄISCHE PATENTANMELDUNG

(11) **EP 1 550 520 A1**
(43) Veröffentlichungstag der Anmeldung: **06.07.2005**
(21) Anmeldenummer: 05090001.8
(22) Anmeldetag: 03.01.2005
(51) Int. Cl.: B09C 1/00, B09C 1/02

(54) **Verfahren zur Mobilisierung von Schadstoffen im Untergrund**

(30) Priorität: 05.01.2004 DE 102004001803
(71) Anmelder: pigadi GmbH, 10623 Berlin (DE); Steinbrecher, Alexander, 04416 Markleeberg (DE)
(72) Erfinder: Steussloff, Sven, 96013 Hallstadt (DE); Steinbrecher, Alexander, 04416 Markleeberg (DE)

(57) **Zusammenfassung**

Die Erfindung betrifft ein Verfahren zur Mobilisierung von Schadstoffen im Untergrund, insbesondere solcher, die sich im Grundwasser oder im Grundwasserschwankungsbereich befinden, das bei der Sanierung von Grundwasser mit Sanierungsbrunnen zur Anwendung kommt.

Aufgabe der Erfindung ist es, ein Verfahren anzugeben, das unmittelbar nur im Grundwasser- und Grundwasserschwankungsbereich wirkt und dort die notwendige Energie zur Schadstoffmobilisierung freisetzt.
Erfindungsgemäß wird die Aufgabe dadurch gekennzeichnet, dass eine bekannte Vorrichtung (2), die Druck- und Energieimpulse auslöst, in einem Sanierungsbrunnen (A) eingefahren wird und mittels pneumatischer oder hydraulischer Impulse (4) aus Sanierungsbrunnen oder Grundwassermessstellen heraus, Grundwasserenergie in Form von Druckwellen freigesetzt wir. Die Schadstoffe (D) im Umfeld des Sanierungsbrunnens werden von der Anhaftung an den Porenwänden abgerissen. Durch den gleichzeitigen Betrieb einer Unterwasserpumpe (1) werden die Schadstoffe im Sanierungsbrunnen sofort abgefördert.

## Beschreibung

Die Erfindung betrifft ein Verfahren zur Mobilisierung von Schadstoffen im Untergrund, insbesondere solcher, die sich im Grundwasser oder im Grundwasserschwankungsbereich befinden, das bei der Sanierung von Grundwasser mit Sanierungsbrunnen zur Anwendung kommt.

Bei der Sanierung von Grundwasser mittels bekannter Verfahren besteht ein Problem häufig darin, dass ein Teil der abzufördernden Schadstoffe sich im Grundwasserschwankungsbereich absetzen und somit nicht mit der, meist durch Unterwasserpumpen, erzeugten Strömung zum Sanierungsbrunnen abtransportiert werden.
Ungelöste Schadstoffe können zudem am Korn in der wassergesättigten Zone anhaften und dadurch ebenso nur teilweise mit der Grundwasserströmung einem Sanierungsbrunnen zufließen.
Durch die genannten Erscheinungen wird eine Grundwassersanierung, insbesondere in dem zeitlichen Ablauf erheblich verlangsamt, das wiederum einen direkten Einfluss auf die Sanierungskosten und den Sanierungserfolg hat.

Aus DE 197 49 746 ist ein Verfahren bekannt, bei dem in Bohrlöchern Ultraschallschwinger eingebaut werden, die unmittelbar im Grundwasser Ultraschallwellen aussenden und somit Schadstoffe im Grundwasser, insbesondere leichtflüchtige, organische Verbindungen und Halogenkohlenwasserstoffe, zu chemischen Abbaureaktionen initiieren.
Das Ziel dieses In-Situ-Verfahrens ist somit die chemische Umsetzung der Schadstoffe in weniger oder nichttoxische Verbindungen. Eine direkte, physikalische Mobilisierung und somit ein schnellerer Abtransport sind vom Verweilort im Untergrund nicht gegeben.

Die DE 38 09 600 beschreibt ein Verfahren, bei dem aus einem Sanierungsbrunnen kontaminiertes Grundwasser entnommen und in einem Reaktor chemisch oxidiert wird. Anschließend wird dieses, mit Sauerstoff angereicherte, Grundwasser beispielsweise über Sickerbrunnen in Grundwasseranstromrichtung wieder in den Untergrund eingegeben. Beim nachfolgenden Durchströmen des verunreinigten Bodens in Richtung Sanierungsbrunnen werden die im Boden befindlichen Schadstoffe zur chemischen Oxidation oder zum biologischen Abbau angeregt. Auch bei diesem Verfahren werden die Probleme der Mobilisierung von Schadstoffe im Grundwasserschwankungsbereich nur bedingt gelöst, da vorrangig nur eine chemische Einwirkung im vom Grundwasser durchströmten Bereich erzielt wird.

Weiterhin ist aus der DE 198 24 930 ein Verfahren bekannt, bei dem über In-situ-Erwärmung des Untergrundes mittels HF-Energie, beispielsweise Wasseranteile im kontaminierten Bereich, mobilisiert und anschließend mit den darin enthaltenen Schadstoffe als Wasserdampf abgesaugt werden. Der HF-Energieeintrag in den Untergrund erfolgt über spezielle Elektroden. Es wird ober Tage ein gesamter Gerätekomplex inklusive Energieversorgung, Wasserdampfabsaugung und -reinigung sowie Wärmerückführung in den Boden installiert.

Des Weiteren sind zur Durchführung des Verfahrens Vorrichtungen nach der DE 198 43 292 A1, DE 103 01 338.5, DE 43 11 843 A1, DE 199 32 593 C1, DE 100 23 454.2 und DE 198 08 621 A1 bekannt.
Durch die von diesen Vorrichtungen auf verschiedene Art ausgelösten Druck- und Energieimpulse im Grundwasser werden die zuvor beschriebenen Bindungen zwischen Schadstoffmolekülen und Festkornoberflächen oder Porenwänden aufgebrochen.
Der Grund hierfür ist, der von dem Druckimpuls ausgehende hohe Energieeintrag in das Grundwasser, der im Extremfall das Molekülgerüst des Grundwassers in Schwingen versetzt. Dadurch werden Absorptionskräfte in Desorptionsvorgänge umgewandelt. Die in Schwingung versetzte Grundwasseroberfläche erreicht einige der oberhalb im Schwankungsbereich anhaftenden Schadstoffe.

Mit den bisher bekannten Verfahren zur Grundwassersanierung werden diese anhaftenden Schadstoffanteile nur selten mobilisiert.

Aufgabe der Erfindung ist es, ein Verfahren anzugeben, das unmittelbar nur im Grundwasser- und Grundwasserschwankungsbereich wirkt und dort die notwendige Energie zur Schadstoffmobilisierung freisetzt.

Erfindungsgemäß wird die Aufgabe dadurch gekennzeichnet, dass eine bekannte Vorrichtung, die Druck- und Energieimpulse auslöst, in einem Sanierungsbrunnen eingefahren wird und mittels pneumatischer oder hydraulischer Impulse aus Sanierungsbrunnen oder Grundwassermessstellen heraus, Grundwasserenergie in Form von Druckwellen freigesetzt wird. Die Schadstoffe im Umfeld des Sanierungsbrunnens werden von der Anhaftung an den Porenwänden abgerissen.
Durch den gleichzeitigen Betrieb einer Unterwasserpumpe werden die Schadstoffe im Sanierungsbrunnen sofort abgefördert.
Zusätzlich wird durch das Abteufen von Impulsbrunnen oder durch vorhandene Brunnen oder Grundwassermessstellen im Umfeld eines Sanierungsbrunnens ein additiver Zustrom einer Schadstofffracht zum Sanierungsbrunnen induziert. Hierbei kommen ebenfalls die bekannten Vorrichtungen zur Erzeugung elektrischer, pneumatischer oder hydraulischer Impulse in den jeweiligen Impulsbrunnen zum Einsatz.
Die Ausbreitung und das Verhalten von Schadstoffen im Untergrund wird von einer Vielzahl unterschiedlicher Faktoren beeinflusst. Grundsätzlich sind jedoch meist zwei Gruppen von Faktoren zu unterscheiden. Die geologischen und hydrogeologischen Verhältnisse am Standort, sowie die physikalischen und chemischen Eigenschaften des konkreten Schadstoffes.
Ist ein Schadstoff durch die ungesättigte Sickerwasserzone hindurch bis zur Grundwasseroberfläche vorgedrungen, beginnen zwischen Grundwasser und Schadstoff, in Abhängigkeit von den Eigenschaften, physikalische und chemische Prozesse zu wirken.
Der Schadstoff schwimmt auf der Grundwasseroberfläche auf, geht in Lösung und befindet sich ungelöst im Grundwasser.
Physikalisch betrachtet, finden hauptsächlich Massenflüsse, wie beispielsweise Konvektion, Diffusion oder Dispersion und Sorptionsvörgänge statt, die durch die Grundwasserabförderung im Zuge einer Sanierungsmaßnahme noch verstärkt wirken.

Insbesondere das Anhaften des Schadstoffes an den Porenwänden infolge auftretender Adhäsionskräfte, ist im Umfeld eines Sanierungsbrunnens durch die Ausbildung des Absenktrichters ein im Grundwasserschwankungsbereich zu erwartender Effekt.
Zudem lagern sich im grundwassergesättigten Bereich durch Adsorptionsprozesse die Schadstoffe auch an den Oberflächen des Festkorns an.
Durch das im erfindungsgemäßen Verfahren inbegriffene zeitgleiche oder zeitversetzte Abpumpen aus dem Sanierungsbrunnen oder benachbarten Brunnen werden die so abgelösten Schadstoffanteile sofort zum Brunnen oder benachbarten Brunnen hin abtransportiert und der jeweiligen Sanierungsanlage zugeführt. Hierbei werden im Bedarfsfall spezielle Fluide im Vorfeld der Impulserzeugung in den Brunnen eingeimpft, die die Mobilisierung der Schadstoffe unterstützen.

Das erfindungsgemäße Verfahren kann in jede bekannte Art von Grundwassersanierungsanlagen, in der Sanierungsbrunnen oder Grundwassermessstellen enthalten sind, integriert werden.

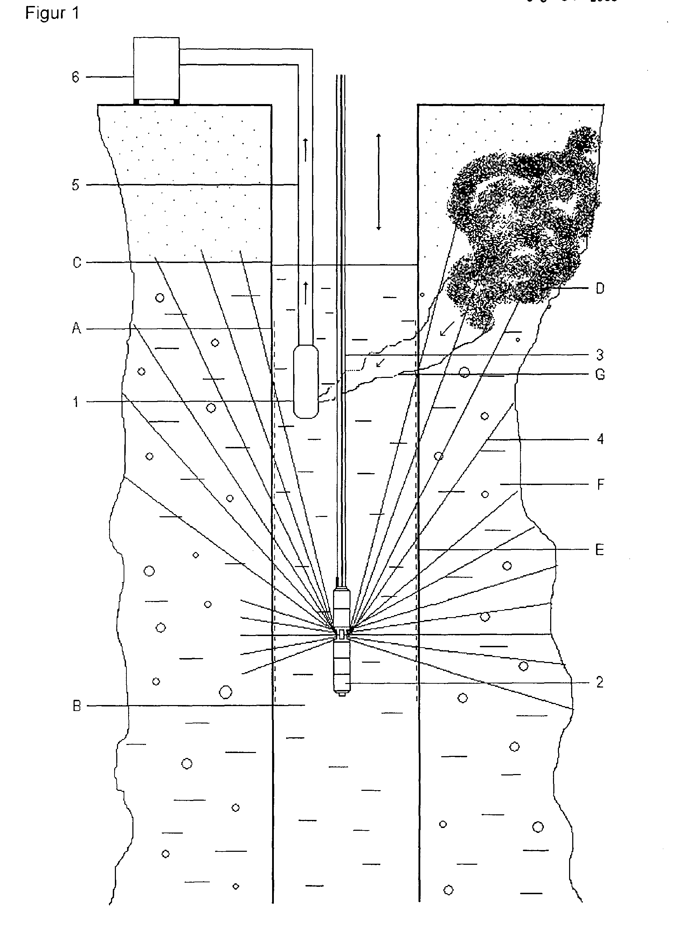

Die Erfindung wird nachfolgend anhand eines Ausführungsbeispiels in der Figur 1 näher erläutert.

In einem Brunnen A wird zum Zwecke der Grundwasserreinigung mittels einer Unterwasserpumpe 1 kontaminiertes Grundwasser B gefördert. Im Grundwasserschwankungsbereich C befindet sich dabei eine Schadstoffmenge D, die Kontakt zum Grundwasser B hat und somit in dieses eintritt.
Mittels einer Vorrichtung zur Impulserzeugung 2, beispielsweise ein pneumatischer Impulsgenerator mit einem Stab 3, die in den Brunnen A bis in den grundwassergefüllten Filterbereich E hinab gelassen wird, werden im Grundwasser B hydraulische Impulse 4 erzeugt, die sich allseitig in der grundwassergesättigten Zone F um den Brunnen herum und ebenso bis in den Grundwasserschwankungsbereich C ausbreiten. Hierbei wirkt die durch die hydraulischen Impulse 4 in das kontaminierte Grundwasser B übertragene Energie derart, dass die Anhaftung des Schadstoffes D an den Porenwänden im Grundwasserschwankungsbereich C teilweise aufgehoben wird. In der grundwassergesättigten Zone F wird die Anhaftung des Schadstoffes D an den Oberflächen des Festkornes gelöst.

Durch das gleichzeitige, ununterbrochene Abpumpen des kontaminierten Grundwassers B mittels der Unterwasserpumpe 1 aus dem Brunnen A, werden die derart zusätzlich abgelösten Schadstoffanteile G sofort aus dem Brunnenumfeld abtransportiert und über eine Rohrleitung 5 einer Grundwassersanierungsanlage 6 zugeführt.
Die Schadstofffracht in dem abgeförderten Wasser erhöht sich durch den Energieeintrag mittels hydraulischer Impulse 4 derart, dass die Zeitdauer der Grundwassersanierung reduziert wird.

### Aufstellung der Bezugszeichen zur Patentanmeldung "Verfahren zur Mobilisierung von Schadstoffen im Untergrund"

- 1: Unterwasserpumpe
- 2: Vorrichtung zur Impulserzeugung / Impulsgenerator
- 3: Stab
- 4: hydraulische Impulse
- 5: Rohrleitung
- 6: Grundwassersanierungsanlage
- A: Brunnen
- B: Kontaminiertes Grundwasser
- C: Grundwasserschwankungsbereich
- D: Schadstoffmenge
- E: Filterbereich
- F: grundwassergesättigte Zone
- G: Schadstoffanteile

## Patentansprüche

1. Verfahren zur Mobilisierung von Schadstoffen im Grundwasser und Grundwasserschwankungsbereich durch Einfahren einer Vorrichtung, die Druck- und Energieimpulse auslöst, in den Sanierungsbrunnen
**dadurch gekennzeichnet, dass**
das mittels pneumatischer oder hydraulischer Impulse (4) aus Sanierungsbrunnen (A) oder Grundwassermessstellen heraus Grundwasserenergie in Form vom Druckwellen gezielt freigesetzt wird und im Umfeld des Sanierungsbrunnens (A) Schadstoffe von der Anhaftung an Porenwänden abgerissen oder mobilisiert werden, die durch gleichzeitigen Betrieb einer Unterwasserpumpe (1) im Sanierungsbrunnen (A) sofort über eine Rohrleitung (5) abgefördert werden.

2. Verfahren nach Anspruch 1
**dadurch gekennzeichnet, dass**
zusätzlich durch das Abteufen von Impulsbrunnen (A) oder durch vorhandene Brunnen (A) oder Grundwassermessstellen im Umfeld des Sanierungsbrunnens (A) ein additiver Zustrom einer Schadstofffracht zu dem Sanierungsbrunnen (A) induziert wird.

3. Verfahren nach Anspruch 1
**dadurch gekennzeichnet, dass**
zur besseren Freisetzung der Impulse (4) vorher Fluide, beispielsweise Wasserstoffperoxyd, eingebracht werden.
